# EUROPÄISCHE PATENTSCHRIFT

(11) **EP 0 595 027 B1**
(45) Veröffentlichungstag und Bekanntmachung des Hinweises auf die Patenterteilung: **27.12.1996**
(21) Anmeldenummer: 93115398.5
(22) Anmeldetag: 24.09.1993
(51) Int. Cl.: B01D 53/00

(54) **Verfahren zur biologischen Reinigung von Abluft**
Process for the biological cleaning of exhaust air
Procédé de nettoyage biologique d'air d'échappement

(30) Priorität: 01.10.1992 DE 4232992
(43) Veröffentlichungstag der Anmeldung: 04.05.1994
(73) Patentinhaber: Zander Umwelt GmbH, D-90409 Nürnberg (DE)
(72) Erfinder: Kottwitz, Max A., D-28215 Bremen (DE); Meibohm, Kai-Uwe, D-28199 Bremen (DE)
(74) Vertreter: MEISSNER, BOLTE & PARTNER

(56) Entgegenhaltungen:
- EP-A- 0 111 302
- EP-A- 0 470 468
- EP-A- 0 497 214
- DE-A- 4 017 388
- DE-A- 4 041 233

## Beschreibung

Die Erfindung betrifft ein Verfahren zur biologischen Reinigung von Abluft gemäß dem Oberbegriff des Anspruchs 1.

Es ist bekannt, Abluft zur biologischen Reinigung durch Tropfkörper zu leiten. Die Tropfkörper verfügen über ein Festbett aus Füllkörpern, auf denen ein durch Mikroorganismen gebildeter Biofilm angesiedelt ist. Der Biofilm muß befeuchtet werden, damit die Mikroorganismen lebensfähig und biologisch aktiv bleiben.

Üblicherweise wird der Biofilm über das notwendige Maß hinaus befeuchtet, nämlich mit Flüssigkeit über seine Sättigungsgrenze hinaus berieselt. Der Biofilm ist dadurch vollständig von der Flüssigkeit umgeben, d. h., die Flüssigkeit kapselt den Biofilm ein. Dadurch wird die biologische Aktivität der den Biofilm bildenden Mikroorganismen behindert. Die Abbauleistung der Schadstoffe in der zu reinigenden Abluft wird dadurch reduziert. Vor allem lassen sich durch dieses bekannte Verfahren wasserunlösliche Stoffe nicht aus der Abluft entfernen.

Die EP-A-0 470 468 zeigt ein Verfahren zur biologischen Reinigung von Abluftströmen. Der Abluftstrom wird durch einen Tropfkörper geleitet. Der Tropfkörper wird in dem vorgenannten Verfahren intermittierend befeuchtet. Direkt nach einer Befeuchtungsphase ist die gesamte Oberfläche des Tropfkörpers von Flüssigkeit umgeben, wodurch die Abbauleistung reduziert ist. Die zu reinigende Abluft kann dann nicht direkt mit dem Tropfkörper in Kontakt kommen, wodurch insbesondere wasserunlösliche Stoffe im Abgas nicht abgebaut werden können.

Aus der EP-A-0 111 302 ist ein Verfahren zur Biofiltration bekannt. Das zu reinigende Abgas wird mit Wasser bzw. Wasserdampf annähernd gesättigt und dann einer als Biofilter wirkenden Biomasse zugeführt. Dieses Verfahren ist aufwendig, weil das zu reinigende Abgas befeuchtet und die Befeuchtung eingestellt werden muß. Darüber hinaus lassen sich mit diesem Verfahren nur wasserlösliche Stoffe abbauen.

Hiervon ausgehend liegt der Erfindung die Aufgabe zugrunde, ein leistungsfähiges Verfahren zur biologischen Reinigung von Abluft zu schaffen, mit dem sich insbesondere auch wasserunlösliche Schadstoffe biologisch aus der Abluft entfernen lassen.

Das Verfahren zur Lösung dieser Aufgabe weist die Maßnahmen des Anspruchs 1 auf. Erfindungsgemäß wird der Biofilm nur soweit befeuchtet, daß er innerlich feucht und vorzugsweise nur ein Teil seiner Oberfläche von der Flüssigkeit benetzt ist. Ein (übriger) Teil der Oberfläche des Biofilms bleibt von der zur Befeuchtung dienenden Flüssigkeit unbenetzt. Dadurch kann am unbefeuchteten Bereich bzw. an den unbefeuchteten Bereichen des Biofilms ein unmittelbarer Kontakt mit den zu reinigenden Abgasen zustande kommen. Dieser Effekt wird noch unterstützt, wenn sich mit der Zeit eine vollständig trockene Oberfläche auf dem Biofilm bildet. Das hat einen wirksamen biologischen Abbau der in der Abluft enthaltenen Schadstoffe zur Folge. Außerdem können auch wasserunlösliche Schadstoffe direkt von den Mikroorganismen des Biofilms biologisch abgebaut werden.

Die nur innere Befeuchtung des Biofilms bzw. der Mikroorganismen erfolgt nach einem weiteren Vorschlag der Erfindung dadurch, daß der Biofilm nur mit einer begrenzten Flüssigkeitsmenge beaufschlagt wird. Diese Flüssigkeitsmenge ist so gewählt, daß sie geringer als das Flüssigkeitsaufnahmevermögen des Biofilms ist. Aufgrund dieser Untersättigung wird die auf den Biofilm zum Beispiel aufgesprühte Flüssigkeit aufgesogen, wodurch sich mindestens auf einem Teil der Oberfläche des Biofilms bzw. der Mikroorganismen kein störender Flüssigkeitsfilm bilden kann.

Nach einer Weiterbildung des erfindungsgemäßen Verfahrens erfolgt die Befeuchtung diskontinuierlich. Die Befeuchtung wird vorgenommen, wenn der Feuchtegehalt im Inneren des Biofilms so weit zurückgegangen ist, daß eine Schädigung bzw. Abtötung der Mikroorganismen zu befürchten ist. Die Befeuchtung wird daraufhin so lange aufrechterhalten, bis die Mikroorganismen nahezu mit Flüssigkeit gesättigt sind. In der Praxis ist die Befeuchtungszeit sehr viel geringer als die zwischen zwei Befeuchtungsprozessen erfolgende Reinigungszeit der Abgase. Der Befeuchtungsvorgang stört deshalb den Reinigungsprozeß nur unwesentlich.

Die Befeuchtung wird entweder durch eine Berieselung mit der Flüssigkeit und/oder mit feuchter Luft vorgenommen. Hierbei kann es sich gegebenenfalls um angefeuchtete Abluft handeln. In diesem Falle kann die biologische Reinigung der Abluft auch während der Befeuchtung erfolgen. Gegebenenfalls kann auch während der Befeuchtung oder der Zufuhr angefeuchteter (Rein-)Luft die Reinigung der Abluft fortgesetzt werden. Bei der zur Befeuchtung dienenden Flüssigkeit kann es sich um reine Flüssigkeit, nämlich Wasser, und/oder nährstoffhaltige Flüssigkeit handeln. Die Befeuchtung kann abwechselnd mit unterschiedlichen Flüssigkeiten erfolgen.

Nach einem weiteren Vorschlag der Erfindung ist es denkbar, den Biofilm zunächst bis zur vollständigen Sättigung der Mikroorganismen zu befeuchten und danach den Biofilm durch reine Luft oder im Kreislauf geführte Abluft so lange zu trocknen, bis mindestens ein Teil der Oberfläche des Biofilms oder der Mikroorganismen frei von Flüssigkeit ist. Zur Beschleunigung dieses Trocknungsprozesses kann die reine Luft bzw. die Abluft vorgewärmt und/oder getrocknet sein.

Zur effektiven Entfernung bestimmter Verunreinigungen aus den Abgasen kann es sinnvoll sein, eine saure Flüssigkeit mit einem pH-Wert kleiner 7 zu verwenden. Vorzugsweise weist die Flüssigkeit einen pH-Wert zwischen 2 und 4 auf. Dadurch können bestimmte Mikroorganismengruppen (Pilze, Hefen oder dergleichen) gefördert werden, die sich auf dem Trägermaterial ansiedeln zum wirksamen biologischen Abbau bestimmter Verunreinigungen oder zur Beschleunigung des biologischen Abbaus der Verunreinigungen.

Schließlich wird vorgeschlagen, die zur Befeuchtung des Biofilms oder der Mikroorganismen dienende Flüssigkeit mit Nährstoffen anzureichern. Diese Nährstoffe begünstigen die Neubildung abgestorbener oder gesättigter Mikroorganismen. Sie können auch dazu dienen, die Ansiedlung von Pilzen oder Pilzkulturen auf den Mikroorganismen zu fördern oder die Pilze bzw. Pilzkulturen am Leben zu erhalten.

Bevorzugte Ausführungsbeispiele der Erfindung werden nachfolgend anhand der Zeichnung näher erläutert. In dieser zeigen:
- Fig. 1: ein Blockschaltbild einer Anlage zur biologischen Reinigung von Abluft, und
- Fig. 2: einen Querschnitt durch einen Festbettreaktor zur Durchführung des erfindungsgemäßen Verfahrens.

Das der Erfindung zugrundeliegende Verfahren dient besonders zur biologischen Beseitigung chemischer Verunreinigungen in der Abluft technischer Prozesse. Insbesondere geht es um die Beseitigung wasserunlöslicher Schadstoffe aus der Abluft von Lackierereien.

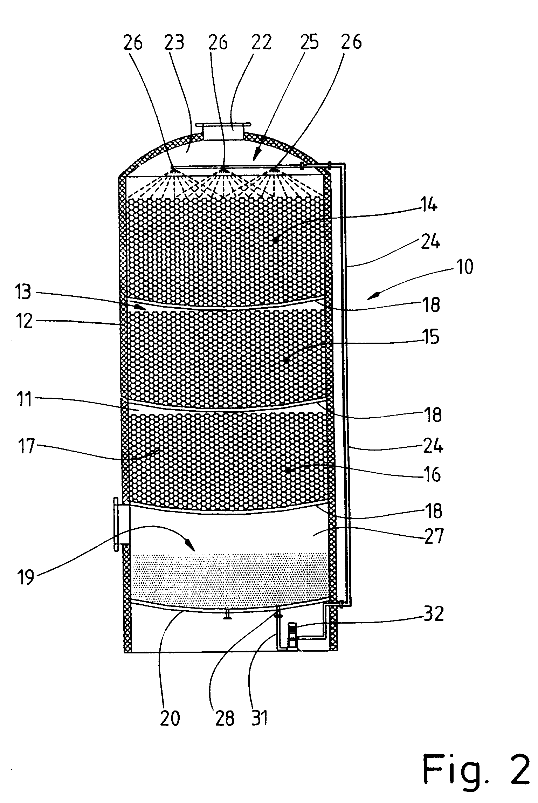

Die Vorrichtung zur Durchführung des Verfahrens verfügt über einen in der Fig. 2 näher dargestellten Tropfkörperreaktor 10. Dieser besteht aus einem aufrechten, zylindrischen Behälter 11, der im gezeigten Ausführungsbeispiel über einen isolierten Mantel 12 verfügt. Im Behälter 11 ist ein Tropfkörper 13 angeordnet. Der Tropfkörper 13 setzt sich beim hier gezeigten Tropfkörperreaktor 10 aus drei übereinander angeordneten Tropfkörperabschnitten 14, 15, 16 zusammen. Jeder der etwa gleich ausgebildeten Tropfkörperabschnitte 14, 15 und 16 besteht aus einem Festbett mit einer Vielzahl von Füllkörpern 17, die an ihrer Oberfläche einen aus Mikroorganismen gebildeten Biofilm aufweisen. Die Mikroorganismen des Biofilms bilden auf den Füllkörpern 17 einen "biologischen Rasen" zum Abbau der in der zu reinigenden Abluft enthaltenden Schadstoffe. Getragen sind die einzelnen Tropfkörperabschnitte 14, 15, 16 durch jeweils einen perforierten Auflageboden 18. Die Auflageböden 18 sind leicht zur Mitte des Behälters 11 hin gewölbt und an ihren äußeren Rändern fest mit der Innenwandung des Behälters 11 verbunden. Im unteren Bereich des Tropfkörperreaktors 10 befindet sich mit Abstand unter dem Auflageboden 18 des untersten Tropfkörperabschnitts 16 ein Flüssigkeitsauffangraum 19. Dieser ist nach unten begrenzt durch einen flüssigkeitsdichten, gewölbten Behälterboden 20.

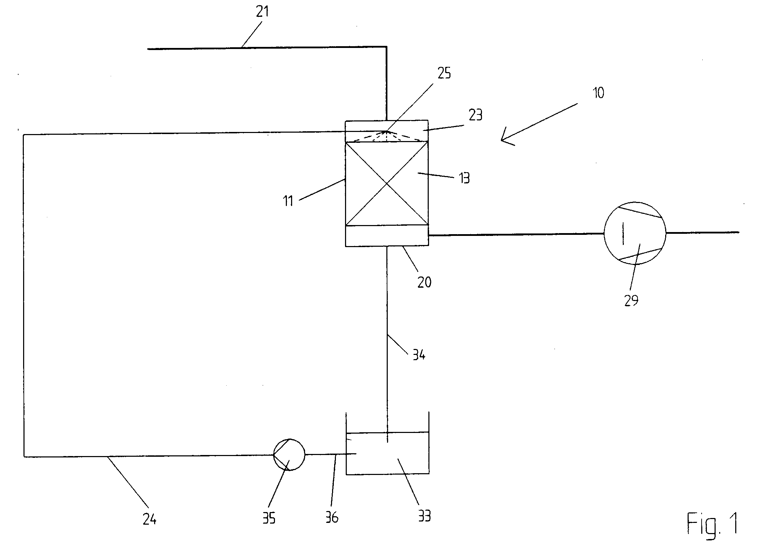

Die Zu- und Abfuhr der Flüssigkeit und Abluft zum bzw. vom Tropfkörperreaktor 10 ergibt sich schematisch aus der Fig. 1. Demnach wird die zu reinigende Abluft über eine Abluftzufuhrleitung 21 durch einen oberen Zulauf 22 (Fig. 2) oberhalb des Tropfkörpers 13 in den Behälter 11 des Tropfkörperreaktors 10 eingeleitet. Seitlich tritt in einen oberen Kopfbereich 23 des Behälters 11 eine Flüssigkeitszufuhrleitung 24 ein. Diese ist verbunden mit einer oberhalb des Tropfkörpers 13 im Behälter 11 angeordneten Berieselungseinrichtung 25 mit mehreren auf die obere Seite des oberen Tropfkörperabschnitts 14 gerichteten Berieselungsdüsen 26 (Fig. 2).

Die Abfuhr der gereinigten Abluft aus dem Tropfkörperreaktor 10 erfolgt an der Unterseite des Tropfkörpers 13, also unter dem Auflageboden 18 des unteren Tropfkörperabschnitts 16. Zu diesem Zweck ist in einem Freiraum 27 zwischen dem unteren Auflageboden 18 des Tropfkörperabschnitts 16 und dem Flüssigkeitsauffangraum 19 eine seitliche Austrittsöffnung 28 (Fig. 2) im isolierten Mantel 12 des Behälters 11 angeordnet. Mit der Austrittsöffnung 28 ist eine zu einem Gebläse 29 führende Abfuhrleitung 30 verbunden.

Beim Ausführungsbeispiel der Fig. 2 wird überschüssige Flüssigkeit, die beispielsweise beim Berieseln des Tropfkörpers 13 am Biofilter vorbeifließt, gesammelt im Flüssigkeitsauffangraum 19. Im Behälterboden 20 befindet sich eine Abfuhrleitung 31, die zu einer Pumpe 32 führt. Diese pumpt überschüssige Flüssigkeit aus dem Flüssigkeitsauffangraum 19 ab. Durch eine Verbindung der Pumpe 32 mit der Flüssigkeitszufuhrleitung 24 gelangt die aus dem Flüssigkeitsauffangraum 19 angepumpte (überschüssige) Flüssigkeit im Kreislauf zur Berieselungseinrichtung 25.

Im Ausführungsbeispiel der Fig. 1 ist der Behälterboden 20 des Tropfkörperreaktors 10 über eine Abfuhrleitung 34 mit einem Sammelbehälter 33 verbunden. Der Sammelbehälter 33 kann den Flüssigkeitsauffangraum 19 unterhalb des Tropfkörpers 13 im Tropfkörperreaktor 10 ersetzen. Es ist aber auch denkbar, daß vom Flüssigkeitsauffangraum 19 die überschüssige Flüssigkeit in den Sammelbehälter 33 abgelassen wird. An den Sammelbehälter 33 ist die Flüssigkeitszufuhrleitung 24 angeschlossen. Die Flüssigkeitszufuhrleitung 24 wird gespeist durch eine Pumpe 35, die über eine Abfuhrleitung 36 mit dem Sammelbehälter 33 verbunden ist (Fig. 1).

Der Sammelbehälter 33 kann als Mischbehälter ausgebildet sein, der es ermöglicht, der Flüssigkeit Nährstoffe für die Mikroorganismen zuzudosieren und mit der Flüssigkeit zu vermischen.

Das erfindungsgemäße Verfahren läuft zunächst in an sich bekannter Weise so ab, daß die zu reinigende Abluft über die Abluftzufuhrleitung 21 von oben in den Tropfkörperreaktor 10 eingeleitet wird. Sie durchströmt dann den Tropfkörperreaktor 10 von oben nach unten, wobei infolge des hierbei entstehenden Kontakts der zu reinigenden Abluft mit den Mikroorganismen des Biofilms auf den Füllkörpern 17 des Tropfkörpers 13 die in der Abluft enthaltenden Schadstoffe eliminiert werden. Unterhalb des Tropfkörpers 13 tritt gereinigte Abluft, also Reinluft, aus dem Tropfkörperreaktor 10 aus. Die gereinigte Abluft wird vom Gebläse 29 über die Abfuhrleitung 30 abgeführt, indem sie dem Lackierraum, aus dem sie mit den Verunreinigungen abgesaugt wurde, wieder zugeführt wird. Es ist aber auch denkbar, die gereinigte Abluft der Atmosphäre zuzuführen.

In erfindungsgemäß besonderer Weise erfolgt die Befeuchtung bzw. Feuchthaltung des Biofilms mit den Mikroorganismen des biologischen Rasens. Im einfachsten Falle wird während der Abluftreinigung, also bei kontinuierlicher Hindurchleitung der zu reinigenden Abluft durch den Tropfkörper 13, ebenfalls kontinuierlich eine Berieselung der Tropfkörper 13 vorgenommen. Dazu wird gegebenenfalls mit Nährstoffen für die Mikroorganismen versetzte Flüssigkeit mittels der Berieselungseinrichtung 25 von oben auf den Tropfkörper 13 aufgesprüht. Diese Flüssigkeit fließt (von oben nach unten) durch die einzelnen Tropfkörperabschnitte 14, 15, 16 des Tropfkörpers 13 hindurch. Dabei wird der durch die zu reinigende Abluft ausgetrocknete Biofilm kontinuierlich wieder mit Flüssigkeit versorgt. Diese Flüssigkeitsversorgung des Biofilms und der Mikroorganismen erfolgt erfindungsgemäß derart, daß nur eine teilweise Befeuchtung erfolgt. Vorzugsweise wird der Biofilm mit den Mikroorganismen nur innerlich feuchtgehalten. Ihre Oberfläche wird demzufolge zumindest so weit trockengehalten, daß sie nicht vollständig von Flüssigkeit umgeben ist. Diese teilweise Befeuchtung erfolgt am einfachsten durch eine entsprechend eingeschränkte Versorgung der Berieselungseinrichtung 25 mit der zur Befeuchtung dienenden Flüssigkeit.

Alternativ ist es möglich, die Befeuchtung diskontinuierlich durchzuführen. Die Berieselungseinrichtung 25 wird dazu nur gelegentlich mit Flüssigkeit versorgt. Die Befeuchtung beginnt, wenn der Biofilm so weit ausgetrocknet ist, daß die Gefahr einer Schädigung der Mikroorganismen besteht. Die Berieselungseinrichtung 25 wird in diesem Falle mit einer solchen Flüssigkeitsmenge versorgt, die zur inneren Befeuchtung des Biofilms bzw. der Mikroorganismen ausreicht, aber noch nicht zur vollständigen Benetzung der Oberfläche des Biofilms führt. Danach kann die Berieselung so lange ausgesetzt werden, bis der Biofilm wieder teilweise ausgetrocknet ist. Die jeweilige Berieselungsdauer beträgt bis zu 2 min, vorzugsweise 10 sec bis 2 min. Die Abstände zwischen zwei Berieselungen betragen 15 min bis zu 12 h.

Die Befeuchtungsdichte beträgt sowohl für die kontinuierliche als auch die diskontinuierliche Befeuchtung bis zu 0,5 m³ Flüssigkeit pro m² des Querschnitts des Tropfkörperreaktors 10.

Die Befeuchtung erfolgt mit reiner Flüssigkeit (Wasser) und einer eine Nährlösung aufweisenden Flüssigkeit. Wird feuchte Abluft verwendet, enthält diese reine Flüssigkeit. Zusätzlich wird befeuchtet mit der die Nährlösung aufweisenden Flüssigkeit. Wird trockene Abluft verwendet, erfolgt abwechselnd eine Befeuchtung mit reiner Flüssigkeit (Wasser) und nährmittelhaltiger Flüssigkeit. Dadurch wird eine gleichmäßige Nährstoffversorgung der Mikroorganismen über die Hitze des Tropfkörperreaktors erzielt.

Alternativ kann der Biofilm so lange befeuchtet werden, bis er keine Feuchtigkeit mehr aufnimmt und seine Oberfläche von einem geschlossenen Flüssigkeitsfilm umgeben ist. Anschließend wird der über die Sättigungsgrenze des Biofilms hinausgehende Anteil der daran anhaftenden (oberflächlichen) Flüssigkeit durch Trocknen eliminiert. Zum Trocknen dient separat zugeführte saubere Luft oder im Kreislauf geführte Abluft. Zur Beschleunigung der Trocknung kann insbesondere vorgewärmte saubere Luft oder Abluft verwendet werden.

## Patentansprüche

1. Verfahren zur biologischen Reinigung von Abluft, wobei die zu reinigende Abluft an einem mit einem Biofilm, der vorzugsweise aus Mikroorganismen gebildet ist, besiedelten Füllkörper entlanggeleitet und der Biofilm feuchtgehalten wird, **dadurch gekennzeichnet,** daß der Biofilm nur soweit befeuchtet wird, daß er innerlich feucht ist, und zumindest ein Teil der Oberfläche des Biofilms bzw. der Mikroorganismen frei von der zur Befeuchtung dienenden Flüssigkeit ist.

2. Verfahren nach Anspruch 1, dadurch gekennzeichnet, daß der Biofilm nur mit einer solchen Flüssigkeitsmenge befeuchtet wird, daß keine Feuchtigkeitssättigung eintritt, vorzugsweise die freie, von der zu reinigenden Abluft bestrichene Oberfläche des Biofilms teilweise trocken ist.

3. Verfahren nach einem oder mehreren der Ansprüche 1 bis 2, dadurch gekennzeichnet, daß zur Befeuchtung feuchte Luft, vorzugsweise befeuchtete Abluft, verwendet wird.

4. Verfahren nach einem oder mehreren der Ansprüche 1 bis 3, dadurch gekennzeichnet, daß die Befeuchtung diskontinuierlich erfolgt.

5. Verfahren nach einem oder mehreren der Ansprüche 1 bis 4, dadurch gekennzeichnet, daß nach dem vorzugsweise diskontinuierlichen Befeuchten (reine) Luft am Biofilm entlanggeleitet wird, bis ein Teil der Oberfläche des Biofilms von der zur Befeuchtung dienenden Flüssigkeit befreit ist.

6. Verfahren nach Anspruch 5, dadurch gekennzeichnet, daß zum Antrocknen der Oberfläche des Biofilms und/oder der Mikroorganismen erwärmte und/oder getrocknete Luft verwendet wird.

7. Verfahren nach einem oder mehreren der Ansprüche 1 bis 6, dadurch gekennzeichnet, daß die Flüssigkeit einen pH-Wert von kleiner 7, vorzugsweise einen pH-Wert von 2 bis 4, aufweist.

8. Verfahren nach einem oder mehreren der Ansprüche 1 bis 7, dadurch gekennzeichnet, daß auf dem Trägermaterial überwiegend Pilze und/oder Hefen angesiedelt werden.

9. Verfahren nach einem oder mehreren der Ansprüche 1 bis 8, dadurch gekennzeichnet, daß die zum Befeuchten dienende Flüssigkeit mit Nährstoffen für die Mikroorganismen versehen wird.

## Claims

1. Process for the biological purification of exhaust air, the exhaust air to be purified being passed along a packing colonized by a biofilm which is preferably formed from microorganisms, and the biofilm being kept moist, characterized in that the biofilm is only moistened to the extent that it is moist internally, and at least some of the surface of the biofilm and/or of the micro-organisms is free from the moistening liquid.

2. Process according to Claim 1, characterized in that the biofilm is moistened only with an amount of liquid such that saturation with moisture does not occur, preferably the free surface of the biofilm, which is swept by the exhaust air to be purified, is partially dry.

3. Process according to one or more of Claims 1 to 2, characterized in that moist air, preferably moistened exhaust air, is used for the moistening.

4. Process according to one or more of Claims 1 to 3, characterized in that the moistening is carried out discontinuously.

5. Process according to one or more of Claims 1 to 4, characterized in that after the preferably discontinuous moistening, (clean) air is passed along the biofilm until some of the surface of the biofilm is freed from the moistening liquid.

6. Process according to Claim 5, characterized in that heated and/or dried air is used for drying the surface of the biofilm and/or the microorganisms.

7. Process according to one or more of Claims 1 to 6, characterized in that the liquid has a pH less than 7, preferably a pH of 2 to 4.

8. Process according to one or more of Claims 1 to 7, characterized in that predominantly moulds and/or yeasts colonize the support material.

9. Process according to one or more of Claims 1 to 8, characterized in that the moistening liquid is supplied with nutrients for the microorganisms.

## Revendications

1. Procédé d'épuration biologique d'air vicié, dans lequel on fait passer l'air vicié à épurer le long d'un corps de remplissage colonisé par un biofilm formé de préférence de micro-organismes et maintient ce biofilm humide, caractérisé par le fait qu'on humidifie le biofilm seulement jusqu'à ce qu'il soit humide intérieurement et qu'au moins une partie de la surface du biofilm ou des micro-organismes soit dépourvue du liquide servant à l'humidification.

2. Procédé selon la revendication 1, caractérisé par le fait qu'on humidifie le biofilm seulement avec une quantité de liquide telle qu'il ne se produise pas de saturation en humidité, de préférence que la surface libre du biofilm balayée par l'air vicié à épurer soit en partie sèche.

3. Procédé selon une ou plusieurs des revendications 1 et 2, caractérisé par le fait qu'on utilise, pour l'humidification, de l'air humide, de préférence de l'air vicié humidifié.

4. Procédé selon une ou plusieurs des revendications 1 à 3, caractérisé par le fait que l'humidification est effectuée de façon discontinue.

5. Procédé selon une ou plusieurs des revendications 1 à 4, caractérisé par le fait qu'après l'humidification de préférence discontinue, on fait passer de l'air (pur) le long du biofilm jusqu'à ce qu'une partie de la surface de celui-ci soit débarrassée du liquide servant à l'humidification.

6. Procédé selon la revendication 5, caractérisé par le fait que, pour le séchage de la surface du biofilm et/ou des micro-organismes, on utilise de l'air chauffé et/ou séché.

7. Procédé selon une ou plusieurs des revendications 1 a 6, caractérisé par le fait que le liquide a un pH inférieur à 7, de préférence un pH de 2 à 4.

8. Procédé selon une ou plusieurs des revendications 1 à 7, caractérisé par le fait qu'on établit sur le support des colonies principalement de champignons et/ou de levures.

9. Procédé selon une ou plusieurs des revendications 1 à 8, caractérisé par le fait qu'on met dans le liquide servant a l'humidification des substances nutritives pour les micro-organismes.
